# EUROPEAN PATENT SPECIFICATION

(11) **EP 4 497 969 B1**
(45) Date of publication and mention of the grant of the patent: **29.07.2026**
(21) Application number: 24189843.6
(22) Date of filing: 19.07.2024
(51) Int. Cl.: F16H 3/00, F16H 3/093, F16H 3/097, F16H 3/08, F16H 37/04

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 24.07.2023 IT 202300015471
(43) Date of publication of application: 29.01.2025
(73) Proprietor: CNH Industrial Italia S.p.A., 10156 Torino (IT)
(72) Inventor: PETRIGLIANO, Rocco, 10156 Turin (IT); BERSELLI, Alberto, 10156 Turin (IT); FORTE, Michelantonio, 10156 Turin (IT); BARBON, Daniel, 10156 Turin (IT)
(74) Representative: CNH Industrial IP Department

(56) References cited:
- WO-A1-2018/113835
- CN-A- 103 291 854
- CN-A- 110 520 651
- DE-A1- 102011 002 472
- FR-A1- 2 531 515
- JP-B2- 4 736 683

## Description

### TECHNICAL FIELD

The present invention relates to a transmission architecture, in particular a transmission architecture for an off-road/work vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, **i.e.** by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles. Examples of such DCT architecture are disclosed in patent document IT102022000024729 A1, FR2531515A1 or WO2018113835A1.

However new requirements request higher speeds of the agricultural vehicles in a wide torque range. This lead to difficulty in gear shifting due to high inertia between the different branches of the transmission.

Moreover, the need of providing more and more transmission stages would lead to high encumbrance and high weight transmission.

Therefore, the need is felt to solve the aforementioned drawbacks in order to maintain a wide range of transmittable torque, at high speeds but with smoother gear shifting and by reducing inertia in different branchers of the transmission.

Furthermore, it is requested to reduce encumbrances of the transmission, its manufacturing time and therefore its costs.

Aim of the present invention is to satisfy the above-mentioned needs in a cost-effective and optimized way.

### SUMMARY OF THE INVENTION

The aforementioned aim is reached by an architecture for a Z dual clutch transmission according to claim 1 and a control method according to claim 8. BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to a first embodiment of the present invention;
- Figure 1A is a schematic representation of a transmission architecture of figure 1 showing concerned power flows in an exemplarily operative condition;
- Figure 1B is a table indicating the activation of elements of the transmission architecture of figure **1****;**
- Figure 1C is a table indicating the activation of elements of the transmission architecture of figure 1 in a second possible operative configuration;
- Figure 2 is a schematic representation of a transmission architecture according to a second embodiment of the present invention;
- Figure 2A is a schematic representation of a transmission architecture of figure 2 showing concerned power flows in an exemplarily operative condition;
- Figure 2B is a table indicating the activation of elements of the transmission architecture of figure 2; and
- Figure 2C is a table indicating the activation of elements of the transmission architecture of figure 2 in a second possible operative configuration. DETAILED DESCRIPTION OF THE INVENTION

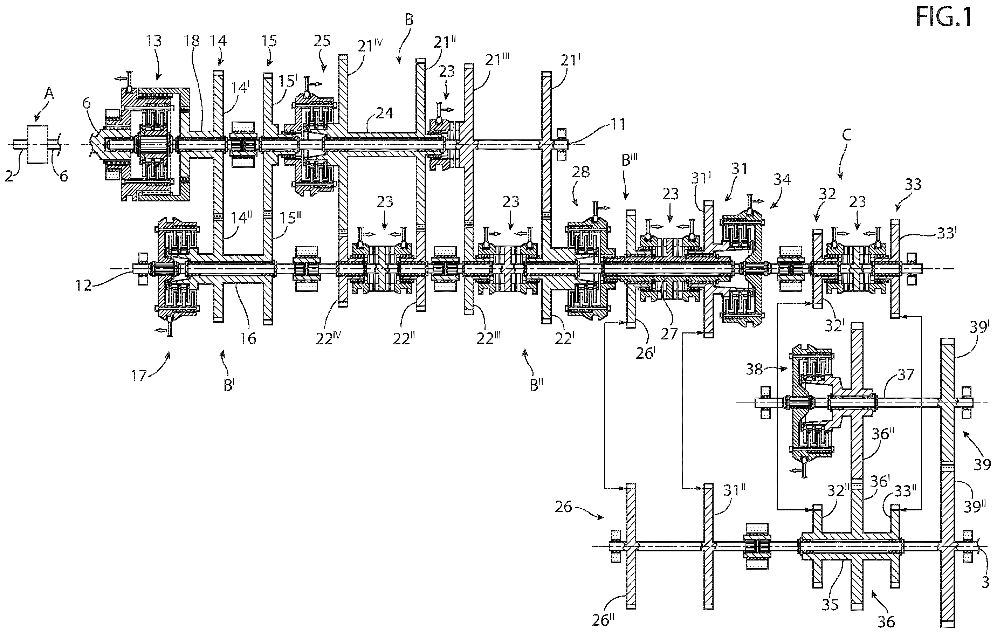

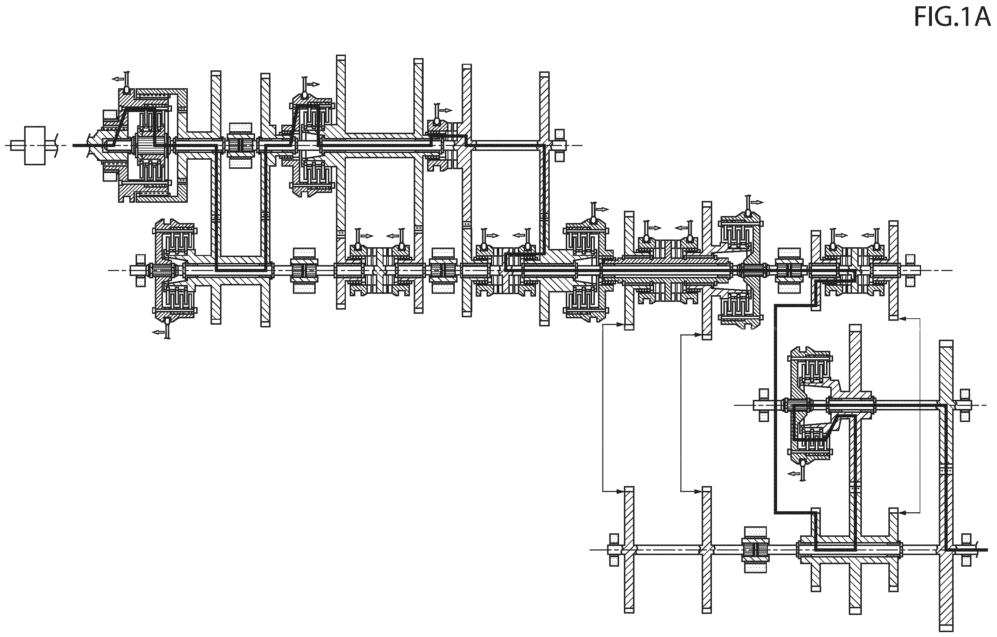

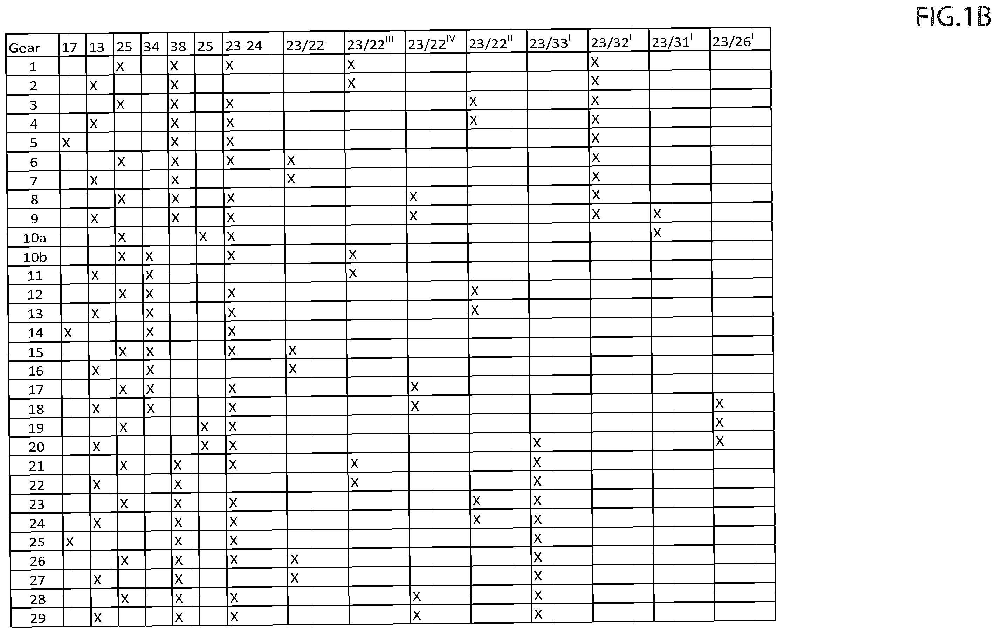

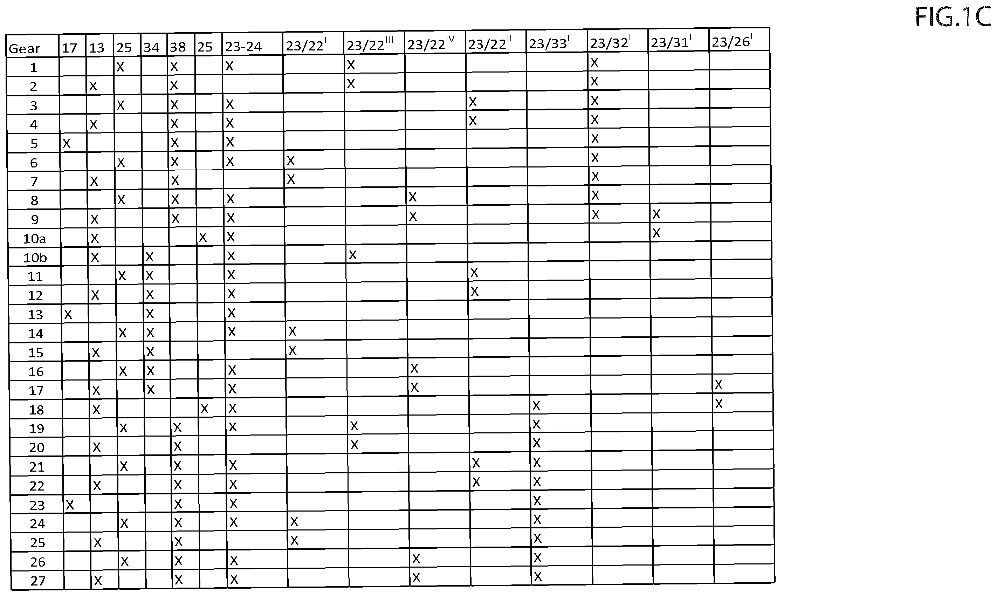

Figure 1 discloses a first embodiment of transmission 1 for an off-road/work vehicle, such as an agricultural vehicle, e.g. a tractor (not illustrated), comprising an engine input shaft 2, operatively connected to a torque source, such as an internal combustion engine of the work vehicle, and an output shaft 3, which can be coupled to a drive axle of the vehicle.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

In the exemplarily disclosed embodiment, the input stage A is generically shown as a block since it can be realized in different manner and provides torque to an intermediate shaft 6

The intermediate shaft provides input torque to the gear ratio stage B. In particular, this latter comprises a a pair of jump stages B', B‴ and an even-odd stage B".

In detail, jump stages B', B'' define at least a pair of jump gear ratios configured to be intermediate torque gear ratio between the plurality of gear ratios defined by even-odd stage B'.

In detail, a first jump stage B' comprises a pair of shafts, namely a odd shaft 11 and an even shaft 12 that are commonly part of the even-odd stage B'.

Advantageously, the first jump stage B' comprises clutch means 13 configured to selectively connect together the input stage (A) and the odd shaft 11.

The first jump stage B' comprises at least a pair of gearings 14, 15 selectively connectable to a second support shaft 16. The first gearing 14 comprises a first wheel 14' rotatably carried by first support shaft and a second wheel 14" rotatably carried by odd shaft 11 while the second gearing comprises a first wheel 15' rotatably carried by second support shaft 16 and a second wheel 15" rotatably carried by odd shaft 11.

The second support shaft 16 is selectively connectable to the even shaft 11 via clutch means 17.

The gear ratio stage B comprises a plurality of gears 21, 22 accommodated on respectively even or odd shafts 11, 12 and having a different size one with respect to the other.

Preferably the even shaft 11 may carry four gears 21, namely a first gear 21^{I} having the biggest diameter, a fourth gear 21^{IV} having the smallest diameter and a second and third gears 21^{II}, 21^{III} having respective diameters comprised between the ones of first and the fourth gears 21^{I}, 21^{IV}.

The odd shaft 12 may carry four gears 22, namely a first gear 22^{I} having the biggest diameter, a fourth gear 22^{IV} having the smallest diameter and a second and third gears 22^{II}, 22^{III} having respective diameters comprised between the ones of first and the fourth gears 22^{I}, 22^{IV}.

Advantageously the gears 21 and 22 have the same diameter of the gear 21, 22 with which each meshes.

The gears of gears sets 21, 22, when selected, represent the different speed ratios of the transmission, namely a first, a second, a third, a fourth, a fifth, a sixth and a seventh speed ratio according to the specific selection of one of the aforementioned wheels 21, 22.

In details wheels 22 are supported in a rotatable free manner the respective even shaft 12, e.g. by means of bearings, so that they are not forced to rotate to the same speed of the respective even shaft 12. In particular, they are fixedly engaged to the even shaft 12 by coupling means 23 such as dog clutches.

In particular, even shaft 12 may comprise two dog clutches 17 interposed respectively between the gear 15^{I} - 15^{III} and 15^{II}-15^{IV}.

With respect to odd gears, at least one gear 21^{I}, 21^{II} is carried fixedly by odd shaft 11 while the remaining ones 21^{I}, 21^{IV} are carried by an auxiliary shaft 24 that is carried in a rotatably free manner over odd shaft 11.

In detail, the second and fourth wheels 21^{II}, 21^{IV} are carried rigidly by the auxiliary shaft 24 while the first and third wheels 21^{I}, 21^{III} are carried rigidly by odd shaft 11.

Advantageously, the auxiliary shaft 24 is selectively connectable to the odd shaft 11 via coupling means 23 such as the one above described.

Always advantageously, the auxiliary shaft 24 is further selectively connectable to the first jump stage B', in detail to second gearing 15, i.e. to the first wheel 15' thereof, in particular via a clutch means 25.

A second jump stage B" is operationally interposed between the even shaft 12 and the range gear stage C. The second jump stage B" comprises at least a gearing 26 rotatably carried by a third support shaft 27.

The first gearing 26 comprises a first wheel 26' rotatably carried by the third support shaft 27 and a second wheel 26" fixedly carried by output shaft 3. The first wheel 26' is selectively fixed to the third support shaft 27 via coupling means 23 of the aforementioned typology.

The third support shaft 27 is selectively connectable to the odd shaft 11 via clutch means 28.

The range gear stage C adds a plurality of additional gear ratio that are combined with the gear ratios defined by the gear ratio stage.

In the disclosed embodiment, the range gear stage three range gear ratio are provided.

The range gear ratio stage C then comprises a first, a second and a third range gearings 31, 32, 33 each comprising a first wheel 31', 32', 33' and a second wheel 31", 32", 33". In particular, first gearing is the so-called medium range, the second gearing is the so-called low range and the third gearing is the so-called fast range.

The first wheel 31' of the first range gearing 31 is rotatably free carried by the aforementioned third support shaft 27 and selectively connectable to this latter via coupling means 23 of the aforementioned typology. The first wheel 31' is furthermore selectively connectable to even shaft 12 via clutch means 34. On the opposite side, the second wheel 31" is rigidly carried by output shaft 3.

The first wheels 32', 33' of the second and third range hearings 32, 33 are rotatably free carried by the even shaft 12 and configured to be selectively connected to this latter via coupling means 23. On the opposite side, the second wheels 32", 33" are rigidly carried by a support shaft 35 that is rotatably free carried by the output shaft 3.

In detail, support shaft 35 is connected to an auxiliary shaft 37 via a gearing 36 comprising a first wheel 36' rigidly carried by support shaft 35 and a second wheel 36" rotatably carried by the auxiliary shaft 37 and selectively fixed to this latter via clutch means 38.

The auxiliary shaft 37 is then connected to the output shaft via a gearing 39 comprising a first wheel 39' rigidly carried by the auxiliary shaft 37 and a second wheel 39" rigidly carried by output shaft 3.

The above-described clutches 13, 17, 25, 28, 34, 38 and coupling means 23 can be selected by respective actuators (not shown) that are controlled by an electronic control unit (not shown). The electronic control unit controls said clutches or said control means by sending control electric signals directed to the respective clutches or coupling means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

The operation of the transmission 1 according to the above described first embodiment is described in the following making reference to figure 1A and to tables of figures 1B and 1C.

The vehicle is driving, e.g. forward, in I gear ratio, i.e. in the configuration shown in figure 1A. In such configuration, the torque passes therefore from input module A toward first support shaft 6. If reverse motion is needed, input stage A is controlled accordingly.

In figure 1A configuration the clutch 13 is disengaged then torque passes via gearings 14, 15 towards auxiliary shaft 24 via clutch 25 and then to wheel 22^{I} that is engaged to even shaft 12. With respect to ranges, the second range gear wheel 31^{I} is selected and torque flows via gearings 36 and 29 and clutch 38 towards output shaft 3.

In order to pass to second gear ratio, it is sufficient to swap clutch 13 to obtain a different torque ratio. Then to pass to third gear ratio, the related gear can be preselected and clutches 13 and 25 thereby obtaining a powershift shifting.

Similar condition is achieved, as listed in the table, via jump gear ratios by swapping also the other clutch means.

The remaining gear ratios and derivable pre-selection of gears and swap of clutches are disclosed in the summarizing table of figure 1B and are not further reported for sake of brevity. The operation of control in figure 1B that discloses selection and pre-selection of gears allows to provide 29 gear ratios. Table of figure 1C discloses selection and pre-selection of gears allows to provide 27 gear ratios.

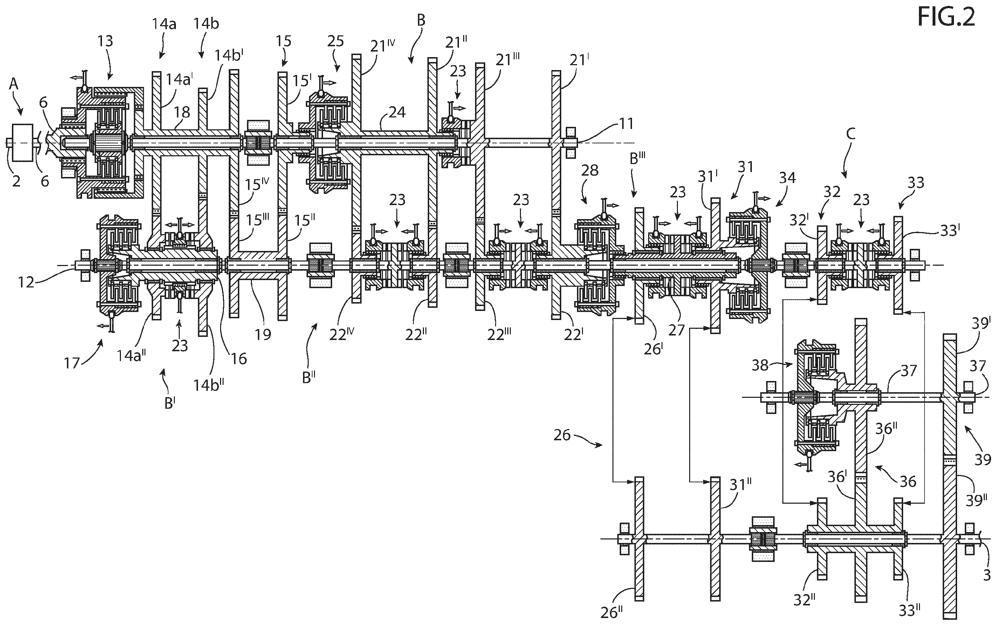

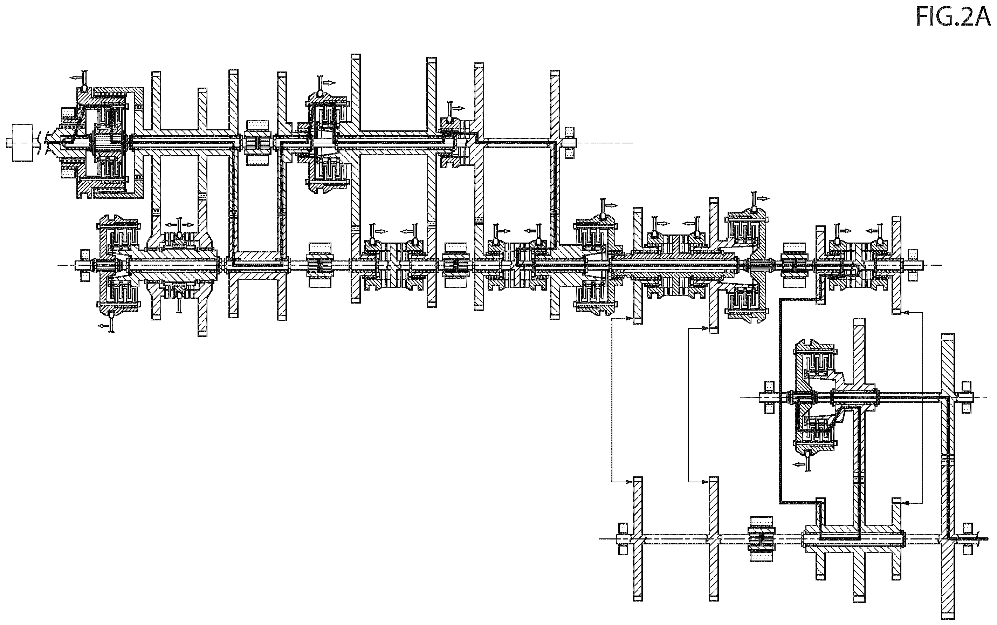

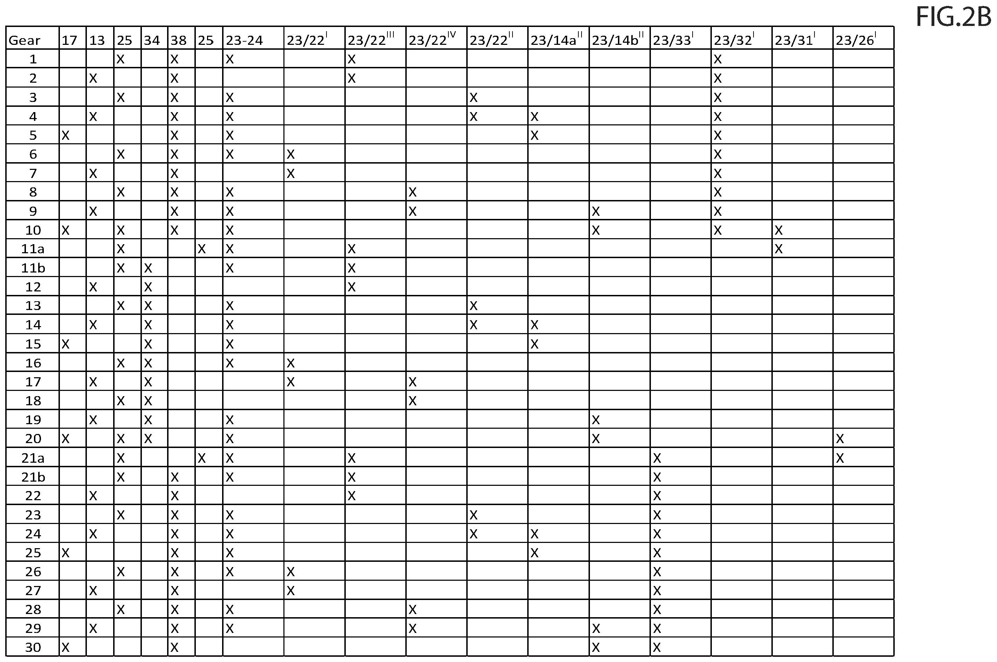

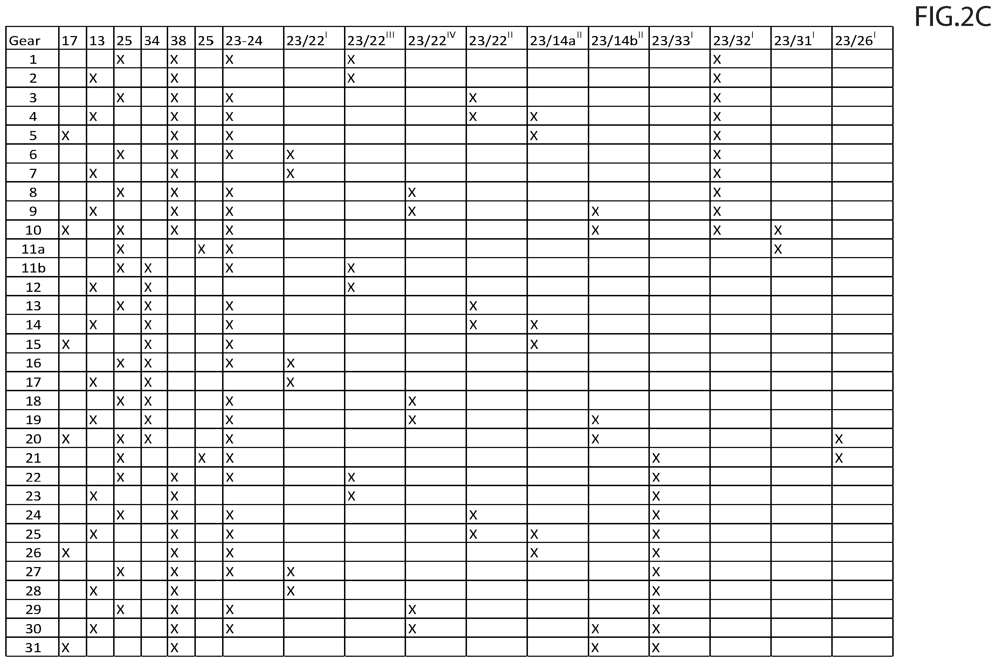

Figure 2 discloses a second embodiment of transmission 1 that differs from the first embodiment of figure 1 in the first jump stage B'.

In the first jump stage B' of the second embodiment two jump ratios are defined by two gearings 14a, 14b respectively comprising a first wheel 14a', 14b' and a second wheel 14a", 14b". The second wheels 14a", 14b" are rotatably carried by a support shaft 16 and selectively fixedly connectable to this latter via coupling means 23 of the above described typology. The support shaft 16 is rotatably carried by even shaft 12 and connectable to this latter via clutch means 17.

The first wheels 14a', 14b' are fixedly carried together by a further support shaft 18 that is rotatably carried by odd shaft 11 and engaged with intermediate shaft 6.

The first jump stage B' further comprises a gearing 15 connecting together clutch means 25 and the further support shaft 18. The gearing 15 comprises a first wheel 15' that is rotatably carried by odd shaft 11 and configured to be connected via clutch means 25 to auxiliary shaft 24, a second wheel 15'' that is fixedly carried by a sleeve shaft 19 that is rotatably free carried by even shaft 12, a third wheel 15‴ fixedly carried by the sleeve shaft 19 and a fourth wheel 15^{IV} that is fixedly carried by further support shaft 18.

The operation of the transmission 1 according to the above described second embodiment is described in the following making reference to figure 2A and to tables of figures 2B and 2C.

The vehicle is driving, e.g. forward, in I gear ratio, i.e. in the configuration shown in figure 2A. In such configuration, the torque passes therefore from input module A toward first support shaft 6. If reverse motion is needed, input stage A is controlled accordingly.

In figure 2A configuration the clutch 13 is disengaged then torque passes via gearing 15 towards auxiliary shaft 24 via clutch 25 and then to wheel 22^{I} that is engaged to even shaft 12. With respect to ranges, the second range gear wheel 31^{I} is selected and torque flows via gearings 36 and 29 and clutch 38 towards output shaft 3.

In order to pass to second gear ratio, it is sufficient to swap clutch 13 to obtain a different torque ratio. Then to pass to third gear ratio, the related gear can be preselected and clutches 13 and 25 thereby obtaining a powershift shifting.

Similar condition is achieved, as listed in the table, via jump gear ratio eleven and twenty-one by swapping also the other clutch means.

The remaining gear ratios and derivable pre-selection of gears and swap of clutches are disclosed in the summarizing table of figure 2B and are not further reported for sake of brevity.

The operation of control in figure 2B that discloses selection and pre-selection of gears allows to provide 30 gear ratios. Table of figure 2C discloses selection and pre-selection of gears allows to provide 31 gear ratios.

The invention also relates to a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by coupling means 23 a further gear involved in the requested gear ratio to the second range gear shaft;
- iv) swap clutches 13, 25, 17 involved in the torque transmission to pass from the initial gear to the further gear;
- v) swap clutches 13, 25, 17 involved in the torque transmission to pass to the requested gear ratio.

In view of the foregoing, the advantages of a transmission architecture 1 according to the invention and the related method are apparent.

The proposed arrangement allows to reduce the inertia at gear switching, thereby smoothing the gear switching. Furthermore, reduction of inertia allows to reduce the weight and the cost of manufacturing gears and shafts.

Furthermore, with respect to known arrangements, the proposed transmission uses less clutches thereby reducing their power consumption therefore increasing the efficiency of the transmission architecture.

Moreover, a reduced number countershafts is present, the passive inertia of the transmission are reduces, thereby further increasing the efficiency of this latter.

Furthermore, the number of gears controlled by coupling means is reduced, thereby further reducing weight and costs of manufacturing the transmission.

Finally the high number of gear ratios provided leads to a consistent advantages in covering a larger ground speed range with the same transmission architecture.

It is clear that modifications can be applied to the described transmission 1 which do not extend beyond the scope of protection defined by the claims.

For example, the number and typology of gears of gear ratio, range and idler gears may be varied according to vehicle necessity.

Further, the transmission may comprise different elements with respect to the described one, e.g. the number and/or typologies of clutches, gears and dog clutches may be varied. Accordingly, input stage A may be realized in any convenient manner.

Moreover, the control and typology of coupling means 30 may be implemented with any typology of control, e.g. a hydraulic, electric or pneumatic in alternative or in combinations.

## Claims

1. An architecture for a dual clutch transmission (1) for a work vehicle, said architecture comprising:
• an input shaft (2) configured to be coupled to a power source of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
wherein said input stage (A) is configured to transmit torque from said input shaft (2) to said gear ratio stage (B),
wherein said gear ratio stage (B) comprises an even-odd stage (B'') and a first jump stage (B'), said even-odd stage (B") and said first jump stages (B') both comprising a first and second common shafts (11, 12),
the even-odd stage (B") comprising a first and a second plurality of gears (21, 22) respectively carried by said first and second common shafts (11, 12), the second plurality of gears (22) carried by said second common shaft (12) being rotatably free carried by this latter and being selectively engaged at rotation via selection means (23), the first plurality of gears (21) carried by said first common shaft (11) being in part rotatably free carried by this latter via a first support shaft (24) rotatably carried by said first common shaft (11) and being selectively engageable at rotation and in part fixedly carried by this latter,
the first jump stage (B') comprising a first, a second and a third clutch means (13, 17, 25) a second support shaft (16), a first and a second gearings (14, 15),
wherein said first clutch means (13) are configured to connect said gear ratio stage (B) to said input stage (A), said second support shaft (16) is rotatably carried by said second common shaft (12) and is selectively engaged at rotation with this latter by said second clutch means (17),
said second support shaft (16) being configured to carry at least one gear making part of said first gearing (14), said first gearing (14) comprising at least a second gear carried by a further support shaft (18) configured to be connected to said first clutch means (13), said first clutch means (13) being configured to selectively connect said input stage (A) to said further support shaft (18),
said third clutch means (25) being configured to selectively couple said second gearing (15) to said first support shaft (24), said second gearing (15) being configured to connect said second support shaft (16) to said third clutch means (25),
wherein said second shaft (12) being connected via said range gear stage (C) to said output shaft (3), and
**characterized in that**
said first support shaft (24) is selectively connectable to said first shaft (11) via selection means (23).

2. Architecture according to claim 1, wherein said first gearing (14) comprises a pair of first wheels (14a', 14b') rigidly carried by said further support shaft (18) and a pair of second wheels (14a", 14b") selectively engageable to said second support shaft (16) via selection means (23).

3. Architecture according to claim 1, wherein said first gearing (14) comprises a first wheel (14') rigidly carried by said further support shaft(18) and a second wheel (14") rigidly carried by said second support shaft (16).

4. Architecture according to claim 2, wherein said second gearing (15) connects said further support shaft (18) to said third clutch means (25).

5. Architecture according to claim 3, wherein said second gearing (15) connects said second support shaft (16) to said third clutch means (25).

6. Architecture according to any of the preceding claims, wherein said selection means (23) comprises a synchronizer or a dog clutch.

7. Architecture according to any of the preceding claims further comprising a control unit configured to control actuators configured to regulate the operation of said clutch means and said selection means (23).

8. Method for operating a transmission architecture (1) as claimed in claim 7 for shifting from a gear ratio of the gear ratio stage (B) to a requested gear ratio of the gear ratio stage (B) and comprising the following steps:
• i) receiving an input for shifting from a gear ratio of gear ratio stage (B) to a requested gear ratio of the gear ratio stage (B);
• ii) if the requested gear ratio foresees the use of the same initial gear of the gear ratio stage (B), then proceed to step v) otherwise proceed with steps iii) and iv);
• iii) engage by coupling means (23) a further gear involved in the requested gear ratio to the second range gear shaft;
• iv) swap clutch means (13, 25, 17) involved in the torque transmission to pass from the initial gear to the further gear;
• v) swap clutch means (13, 25, 17) involved in the torque transmission to pass to the requested gear ratio.

## Patentansprüche

1. Architektur für ein Doppelkupplungsgetriebe (1) für ein Arbeitsfahrzeug, wobei die Architektur umfasst:
• eine Eingangswelle (2), die konfiguriert ist, um an eine Energiequelle des Arbeitsfahrzeugs gekoppelt zu werden,
• eine Ausgangswelle (3), die konfiguriert ist, um mit einer Antriebsachse des Arbeitsfahrzeugs verbunden zu werden,
• eine Eingangsstufe (A), eine Übersetzungsstufe (B) und eine Bereichsübersetzungsstufe (C), die in Bezug auf die Eingangswelle (2) und die Ausgangswelle (3) funktionell miteinander verbunden sind,
wobei die Eingangsstufe (A) konfiguriert ist, um Drehmoment von der Eingangswelle (2) an die Übersetzungsstufe (B) zu übertragen,
wobei die Übersetzungsstufe (B) eine Gerade-Ungerade-Stufe (B") und eine erste Sprungstufe (B') umfasst, wobei die Gerade-Ungerade-Stufe (B") und die ersten Sprungstufen (B') beide eine erste und zweite gemeinsame Welle (11, 12) umfassen,
wobei die Gerade-Ungerade-Stufe (B") eine erste und eine zweite Vielzahl von Zahnrädern (21, 22) umfasst, die jeweils von der ersten und zweiten gemeinsamen Welle (11, 12) getragen werden, wobei die zweite Vielzahl von Zahnrädern (22), die von der zweiten gemeinsamen Welle (12) getragen wird, von dieser Letzteren frei drehbar getragen wird und bei Drehung über Auswahlmittel (23) selektiv in Eingriff gebracht wird, wobei die erste Vielzahl von Zahnrädern (21), die von der ersten gemeinsamen Welle (11) getragen wird, teilweise drehbar frei von dieser Letzteren über eine erste Stützwelle (24) getragen wird, die drehbar von der ersten gemeinsamen Welle (11) getragen wird und bei Drehung selektiv in Eingriff gebracht werden kann und teilweise fest von dieser Letzteren getragen wird,
die erste Sprungstufe (B') ein erstes, ein zweites und ein drittes Kupplungsmittel (13, 17, 25), eine zweite Stützwelle (16), ein erstes und ein zweites Zahnradgetriebe (14, 15) umfasst,
wobei das erste Kupplungsmittel (13) konfiguriert ist, um die Übersetzungsstufe (B) mit der Eingangsstufe (A) zu verbinden, wobei die zweite Stützwelle (16) drehbar von der zweiten gemeinsamen Welle (12) getragen wird und bei Drehung selektiv mit dieser Letzteren durch das zweite Kupplungsmittel (17) in Eingriff gebracht wird,
wobei die zweite Stützwelle (16) konfiguriert ist, mindestens ein Zahnrad zu tragen, das Teil des ersten Zahnradgetriebes (14) ist, wobei das erste Zahnradgetriebe (14) mindestens ein zweites Zahnrad umfasst, das von einer weiteren Stützwelle (18) getragen wird, die konfiguriert ist, um mit dem ersten Kupplungsmittel (13) verbunden zu werden, wobei das erste Kupplungsmittel (13) konfiguriert ist, um die Eingangsstufe (A) selektiv mit der weiteren Stützwelle (18) zu verbinden,
wobei das dritte Kupplungsmittel (25) konfiguriert ist, um das zweite Zahnradgetriebe (15) selektiv mit der ersten Stützwelle (24) zu koppeln, wobei das zweite Zahnradgetriebe (15) konfiguriert ist, um die zweite Stützwelle (16) mit dem dritten Kupplungsmittel (25) zu verbinden,
wobei die zweite Welle (12) über die Bereichsgetriebestufe (C) mit der Ausgangswelle (3) verbunden ist und
**dadurch gekennzeichnet, dass**
die erste Stützwelle (24) über Auswahlmittel (23) selektiv mit der ersten Welle (11) verbunden werden kann.

2. Architektur nach Anspruch 1, wobei das erste Zahnradgetriebe (14) ein Paar erster Räder (14a', 14b'), die starr von der weiteren Stützwelle (18) getragen werden, und ein Paar zweiter Räder (14a", 14b") umfasst, die über Auswahlmittel (23) selektiv mit der zweiten Stützwelle (16) in Eingriff gebracht werden können.

3. Architektur nach Anspruch 1, wobei das erste Zahnradgetriebe (14) ein erstes Rad (14'), das starr von der weiteren Stützwelle (18) getragen wird, und ein zweites Rad (14") umfasst, das starr von der zweiten Stützwelle (16) getragen wird.

4. Architektur nach Anspruch 2, wobei das zweite Zahnradgetriebe (15) die weitere Stützwelle (18) mit dem dritten Kupplungsmittel (25) verbindet.

5. Architektur nach Anspruch 3, wobei das zweite Zahnradgetriebe (15) die zweite Stützwelle (16) mit dem dritten Kupplungsmittel (25) verbindet.

6. Architektur nach einem der vorstehenden Ansprüche, wobei das Auswahlmittel (23) einen Synchronisierer oder eine Klauenkupplung umfasst.

7. Architektur nach einem der vorstehenden Ansprüche, ferner umfassend eine Steuereinheit, die konfiguriert ist, um Aktuatoren zu steuern, die konfiguriert sind, um den Betrieb des Kupplungsmittels und des Auswahlmittels (23) zu regeln.

8. Verfahren zum Betreiben einer Getriebearchitektur (1) nach Anspruch 7 zum Schalten von einer Übersetzung der Übersetzungsstufe (B) zu einer angeforderten Übersetzung der Übersetzungsstufe (B) und umfassend die folgenden Schritte:
• i) Empfangen einer Eingabe zum Schalten von einer Übersetzung der Übersetzungsstufe (B) zu einer angeforderten Übersetzung der Übersetzungsstufe (B);
• ii) falls die angeforderte Übersetzung die Verwendung desselben anfänglichen Zahnrads der Übersetzungsstufe (B) vorsieht, dann Fortfahren mit Schritt v), andernfalls Fortfahren mit den Schritten iii) und iv);
• iii) Einrücken durch Kupplungsmittel (23) eines weiteres Zahnrads, das an dem angeforderten Übersetzungsverhältnis beteiligt ist, mit der zweiten Bereichsgetriebewelle;
• iv) Wechseln von Kupplungsmittel (13, 25, 17), das an der Drehmomentübertragung beteiligt ist, um von dem anfänglichen Zahnrad zu dem weiteren Zahnrad zu wechseln;
• v) Wechseln von Kupplungsmittel (13, 25, 17), das an der Drehmomentübertragung beteiligt ist, um zu der angeforderten Übersetzung zu wechseln.

## Revendications

1. Architecture pour une transmission à double embrayage (1) pour un véhicule de travail, ladite architecture comprenant :
• un arbre d'entrée (2) conçu pour être accouplé à une source d'alimentation dudit véhicule de travail,
• un arbre de sortie (3) conçu pour être relié à un essieu moteur dudit véhicule de travail,
• un étage d'entrée (A), un étage de rapports de transmission (B) et un étage de rapports de gamme (C) reliés de manière fonctionnelle l'un à l'autre par rapport audit arbre d'entrée (2) et audit arbre de sortie (3),
dans laquelle ledit étage d'entrée (A) est conçu pour transmettre un couple dudit arbre d'entrée (2) audit étage de rapports de transmission (B),
dans laquelle ledit étage de rapports de transmission (B) comprend un étage pair-impair (B") et un premier étage de saut (B'), ledit étage pair-impair (B") et lesdits premiers étages de saut (B') comprenant tous deux un premier et un second arbre commun (11, 12),
l'étage pair-impair (B") comprenant une première et une seconde pluralité d'engrenages (21, 22) respectivement portés par lesdits premier et second arbres communs (11, 12), la seconde pluralité d'engrenages (22) portés par ledit second arbre commun (12) étant librement portée de manière rotative par ce dernier et étant sélectivement mise en prise en rotation par l'intermédiaire d'un moyen de sélection (23), la première pluralité d'engrenages (21) portés par ledit premier arbre commun (11) étant en partie librement portés de manière rotative par ce dernier par l'intermédiaire d'un premier arbre de support (24) porté de manière rotative par ledit premier arbre commun (11) et pouvant être mis en prise en rotation de manière sélective et en partie portés de manière fixe par ce dernier,
le premier étage de saut (B') comprenant un premier, un deuxième et un troisième moyen d'embrayage (13, 17, 25), un second arbre de support (16), un premier et un second engrenage (14, 15),
dans laquelle ledit premier moyen d'embrayage (13) est conçu pour relier ledit étage de rapports de transmission (B) audit étage d'entrée (A), ledit second arbre de support (16) est porté de manière rotative par ledit second arbre commun (12) et est mis en prise en rotation de manière sélective avec ce dernier par ledit deuxième moyen d'embrayage (17),
ledit second arbre de support (16) étant conçu pour porter au moins un engrenage faisant partie dudit premier engrenage (14), ledit premier engrenage (14) comprenant au moins un second engrenage porté par un arbre de support (18) supplémentaire conçu pour être relié audit premier moyen d'embrayage (13), ledit premier moyen d'embrayage (13) étant conçu pour relier de manière sélective ledit étage d'entrée (A) audit arbre de support (18) supplémentaire,
ledit troisième moyen d'embrayage (25) étant conçu pour accoupler de manière sélective ledit second engrenage (15) audit premier arbre de support (24), ledit second engrenage (15) étant conçu pour relier ledit second arbre de support (16) audit troisième moyen d'embrayage (25),
dans laquelle ledit second arbre (12) est relié par l'intermédiaire dudit étage de gamme (C) audit arbre de sortie (3), et
**caractérisée en ce que**
ledit premier arbre de support (24) peut être relié de manière sélective audit premier arbre (11) par l'intermédiaire d'un moyen de sélection (23).

2. Architecture selon la revendication 1, dans laquelle ledit premier engrenage (14) comprend une paire de premières roues (14a', 14b') portées de manière rigide par ledit arbre de support (18) supplémentaire et une paire de secondes roues (14a", 14b") pouvant être mis en prise de manière sélective avec ledit second arbre de support (16) par l'intermédiaire d'un moyen de sélection (23).

3. Architecture selon la revendication 1, dans laquelle ledit premier engrenage (14) comprend une première roue (14') portée de manière rigide par ledit arbre de support (18) supplémentaire et une seconde roue (14") portée de manière rigide par ledit second arbre de support (16).

4. Architecture selon la revendication 2, dans laquelle ledit second engrenage (15) relie ledit arbre de support (18) supplémentaire audit troisième moyen d'embrayage (25).

5. Architecture selon la revendication 3, dans laquelle ledit second engrenage (15) relie ledit second arbre de support (16) audit troisième moyen d'embrayage (25).

6. Architecture selon l'une quelconque des revendications précédentes, dans laquelle ledit moyen de sélection (23) comprend un synchroniseur ou un embrayage à griffes.

7. Architecture selon l'une quelconque des revendications précédentes, comprenant en outre une unité de commande configurée pour commander des actionneurs configurés pour réguler le fonctionnement desdits moyens d'embrayage et dudit moyen de sélection (23).

8. Procédé de fonctionnement d'une architecture de transmission (1) selon la revendication 7 pour passer d'un rapport de transmission de l'étage de rapports de transmission (B) à un rapport de transmission demandé de l'étage de rapports de transmission (B) et comprenant les étapes suivantes :
• i) la réception d'une entrée pour passer d'un rapport de transmission de l'étage de rapports de transmission (B) à un rapport de transmission demandé de l'étage de rapports de transmission (B) ;
• ii) si le rapport de transmission demandé prévoit l'utilisation de la même transmission initiale de l'étage de rapports de transmission (B), le fait de procéder à l'étape v) sinon, le fait de procéder aux étapes iii) et iv) ;
• iii) la mise en prise, par un moyen d'accouplement (23), un engrenage supplémentaire impliqué dans le rapport de transmission demandé au second arbre de gamme ;
• iv) le fait d'intervertir les moyens d'embrayage (13, 25, 17) impliqués dans la transmission de couple pour passer de la transmission initiale à la transmission supplémentaire ;
• v) le fait d'intervertir les moyens d'embrayage (13, 25, 17) impliqués dans la transmission de couple pour passer au rapport de transmission demandé.
